(19) Europäisches Patentamt European Patent Office Office européen des brevets

(11) **EP 4 444 560 B1**

(12) **EUROPÄISCHE PATENTSCHRIFT**

(45) Veröffentlichungstag und Bekanntmachung des Hinweises auf die Patenterteilung:
**01.07.2026 Patentblatt 2026/27**

(21) Anmeldenummer: **22785971.7**

(22) Anmeldetag: **13.09.2022**

(51) Internationale Patentklassifikation (IPC):
**B60H 1/00** *(2006.01)* **B60H 1/32** *(2006.01)*

(52) Gemeinsame Patentklassifikation (CPC):
**B60H 1/323; B60H 1/00907; B60H 1/3213;**
B60H 2001/3258; B60H 2001/3285

(86) Internationale Anmeldenummer:
**PCT/EP2022/075423**

(87) Internationale Veröffentlichungsnummer:
**WO 2023/104363 (15.06.2023 Gazette 2023/24)**

(54) **VERFAHREN ZUM BETREIBEN EINES KÄLTEMITTELKREISES EINES KRAFTFAHRZEUGS UND KRAFTFAHRZEUG**

METHOD FOR OPERATING A REFRIGERANT CIRCUIT OF A MOTOR VEHICLE, AND MOTOR VEHICLE

PROCÉDÉ DE FONCTIONNEMENT D'UN CIRCUIT DE RÉFRIGÉRANT D'UN VÉHICULE AUTOMOBILE, ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2021 DE 102021132039**

(43) Veröffentlichungstag der Anmeldung:
**16.10.2024 Patentblatt 2024/42**

(73) Patentinhaber: **AUDI AG**
**85057 Ingolstadt (DE)**

(72) Erfinder: **CHERCHI, Julian**
**85131 Pollenfeld (DE)**

(56) Entgegenhaltungen:
**DE-A1- 102013 021 360 DE-A1- 102019 133 546**
**DE-A1- 102019 203 292**

**Beschreibung**

Die Erfindung betrifft ein Verfahren zum Betreiben eines Kältemittelkreises eines Kraftfahrzeugs. Der Kältemittelkreis umfasst einen Verdichter, welcher in einem Heizbetrieb des Kältemittelkreises ein Kältemittel durch einen ersten Kondensator hindurch fördert. Mittels des ersten Kondensators wird ein in einen Fahrgastraum des Kraftfahrzeugs einbringbarer Luftstrom erwärmt. Der Verdichter fördert das Kältemittel in dem Heizbetrieb durch einen zweiten Kondensator hindurch, mittels welchem eine weitere Abkühlung des Kältemittels bewirkbar ist. Zumindest ein Teilstrom des von dem zweiten Kondensator herkommenden Kältemittels wird mittels eines ersten Expansionsorgans entspannt und einem ersten Verdampfer zugeführt. Mittels des ersten Verdampfers ist eine Feuchte des in den Fahrgastraum des Kraftfahrzeugs einbringbaren Luftstroms verringerbar. Des Weiteren betrifft die Erfindung ein Kraftfahrzeug mit einem Kältemittelkreis.

Die DE 10 2018 213 232 A1 beschreibt Verfahren zum Betreiben einer Kälteanlage eines Fahrzeugs mit einem eine Wärmepumpenfunktion aufweisenden Kältemittelkreislauf. In einem Nachheizbetrieb wird bei einem Wärmeüberschuss neben einer Wärmeabgabe an die Zuluft eines Fahrgastraums über einen inneren Heizkondensator zusätzlich über einen äußeren Wärmeübertrager Wärme an die Umgebung des Fahrzeugs abgegeben, bevor das Kältemittel über einen Verdampfer wieder zurück zu einem Kältemittelverdichter strömt. Hierzu wird ein dem äußeren Wärmeübertrager vorgeschaltetes Nachheiz-Expansionsorgan vollständig geöffnet, wobei das Druckniveau des Kältemittels das Drucklevel des Heizkondensators annimmt. Anschließend wird das Kältemittel mittels eines Expansionsventils in den Verdampfer auf Niederdruck expandiert.

Die DE 10 2019 203 292 A1 beschreibt ein Verfahren zum Betreiben einer Kälteanlage für ein Fahrzeug. In einem Reheat-Betrieb wird bei einem Wärmemangel im Kältemittelkreislauf zur Wärmeaufnahme zusätzlich zu einem Verdampfer auch ein Chiller durch Öffnen eines Chiller-Expansionsorgans parallelgeschaltet. Demgegenüber wird bei einem Wärmeüberschuss im Reheat-Betrieb neben einer Wärmeabgabe an einen Zuluftstrom des Fahrgastraums über einen Heizkondensator zusätzlich über einen äußeren Wärmeübertrager Wärme an die Umgebung des Fahrzeugs abgegeben, bevor das Kältemittel über den Verdampfer wieder zurück zu einem Kältemittelverdichter strömt.

Die DE 10 2019 133 488 A1 beschreibt ein weiteres Nachheizverfahren zum Betreiben einer Kälteanlage für ein Kraftfahrzeug.

Die DE 10 2019 121 711 A1 beschreibt ein Wärmeverwaltungssystem für ein elektrifiziertes Fahrzeug.

Die DE 10 2009 056 027 A1 beschreibt ein Verfahren zum Betrieb eines Kältemittelkreislaufs einer Fahrzeug-Klimaanlage.

Aufgabe der vorliegenden Erfindung ist es, ein Verfahren der eingangs genannten Art anzugeben, welches mit einem verbesserten Heizbetrieb einhergeht, und ein Kraftfahrzeug mit einer zur Durchführung des Verfahrens ausgebildeten Steuerungseinrichtung zu schaffen.

Diese Aufgabe wird durch ein Verfahren mit den Merkmalen des Patentanspruchs 1 und durch ein Kraftfahrzeug mit den Merkmalen des Patentanspruchs 10 gelöst. Vorteilhafte Ausgestaltungen mit zweckmäßigen Weiterbildungen der Erfindung sind in den abhängigen Patentansprüchen und in der nachfolgenden Beschreibung angegeben.

Bei dem erfindungsgemäßen Verfahren zum Betreiben eines Kältemittelkreises eines Kraftfahrzeugs fördert ein Verdichter in einem Heizbetrieb des Kältemittelkreises ein Kältemittel durch einen ersten Kondensator hindurch. Mittels des ersten Kondensators wird ein in einen Fahrgastraum des Kraftfahrzeugs einbringbarer Luftstrom erwärmt. Der Verdichter fördert das Kältemittel in dem Heizbetrieb durch einen zweiten Kondensator hindurch, mittels welchem eine weitere Abkühlung des Kältemittels bewirkbar ist. Zumindest ein Teilstrom des von dem zweiten Kondensator herkommenden Kältemittels wird mittels eines ersten Expansionsorgans entspannt und einem ersten Verdampfer zugeführt. Mittels des ersten Verdampfers ist eine Feuchte des in den Fahrgastraum des Kraftfahrzeugs einbringbaren Luftstroms verringerbar. Zum Erhöhen einer an dem ersten Kondensator zur Verfügung stehenden Heizleistung wird ein weiterer Teilstrom des von dem zweiten Kondensator herkommenden Kältemittels mittels eines zweiten Expansionsorgans entspannt und einem zweiten Verdampfer zugeführt. Das von den Verdampfern kommende Kältemittel wird einer Saugseite des Verdichters zugeführt.

Dieses Verfahren beruht auf der Erkenntnis, dass durch Beaufschlagen des zweiten Verdampfers mit dem entspannten weiteren Teilstrom des Kältemittels sehr einfach und rasch zusätzliche Wärme in das Kältemittel eingebracht werden kann. Denn das den zweiten Verdampfer durchströmende Kältemittel kann Wärme aus einem Kühlmedium aufnehmen, mit welchem der zweite Verdampfer beaufschlagt werden kann. Dadurch braucht nicht zum Zwecke des Erhöhens der an dem ersten Kondensator zur Verfügung stehenden Heizleistung das Durchströmtwerden des zweiten Kondensators mit Kältemittel unterbunden zu werden. Dies ist im Hinblick auf einen stabilen Heizbetrieb des Kältemittelkreises vorteilhaft. Folglich geht das Verfahren mit einem verbesserten Heizbetrieb einher.

Der erste Kondensator, welcher im Heizbetrieb des Kältemittelkreises als Gaskühler betrieben wird und auch als Heizregister bezeichnet werden kann, kann sehr effizient warme Luft für den Innenraum oder Fahrgastraum bereitstellen, indem der erste Kondensator den in den Fahrgastraum des Kraftfahrzeugs einbringbaren Luftstrom erwärmt. Und durch das Entspannen des Kältemittels an dem ersten Expansionsorgan kann eine besonders effiziente, insbesondere energieeffiziente, Entfeuchtung des in den Fahrgastraum des Kraftfahrzeugs einbringbaren Luftstroms erreicht werden.

Mittels des Verfahrens lässt sich daher eine Erhöhung der Effizienz bei einer Klimatisierung des Fahrgastraums oder Innenraums und eine breite Verfügbarkeit erreichen. Insbesondere kann eine effiziente Klimatisierung des Fahrgastraums bei Temperaturen der Umgebungsluft von etwa 15 °C bis etwa 35 °C sichergestellt werden. Insbesondere wenn der Verdichter als elektrisch angetriebener Kältemittelverdichter ausgebildet ist, lässt sich in vorteilhafter Weise eine Entnahme von elektrischer Leistung aus einem elektrischen Energiespeicher des Kraftfahrzeugs minimieren. Wenn der elektrische Energiespeicher zudem elektrische Energie für eine Antriebseinrichtung des Kraftfahrzeugs bereitstellt, etwa weil das Kraftfahrzeug als Elektrofahrzeug oder Hybridfahrzeug ausgebildet ist, lässt sich dementsprechend eine Reichweite des Kraftfahrzeugs erhöhen.

Durch eine Aufteilung der an dem ersten Kondensator und an dem zweiten Kondensator jeweils zur Verfügung gestellten Heizleistung kann darüber hinaus über eine entsprechende Klimaregelung ein gutes und komfortables Mischungsverhältnis aus Warmluft und Frischluft beziehungsweise Umgebungsluft frei gewählt werden. Dies liegt daran, dass eine geforderte, von dem ersten Kondensator zur Verfügung zu stellende Heizleistung sehr exakt bereitgestellt werden kann. Denn es braucht nicht ein Mischungsverhältnis aus Kaltluft und Umgebungsluft beziehungsweise Frischluft eingestellt zu werden.

Durch das Beaufschlagen des zweiten Verdampfers mit dem weiteren Teilstrom des von dem zweiten Kondensator her kommenden Kältemittels kann insbesondere ein temporäres Defizit der an dem ersten Kondensator zur Verfügung stehenden Heizleistung sehr einfach ausgeglichen werden. Zum Auftreten eines solchen Defizits kann es beispielsweise kommen, wenn etwa von einem Insassen des Fahrgastraums eine stärkere Erwärmung des mittels des ersten Kondensators erwärmbaren Luftstroms gewünscht wird und der Insasse eine Bedieneinrichtung einer den Kältemittelkreis umfassenden Klimaanlage des Kraftfahrzeugs entsprechend betätigt.

Des Weiteren kann durch das Beaufschlagen des zweiten Verdampfers mit dem weiteren Teilstrom sehr rasch und aufwandsarm auf eine Situation reagiert werden, in welcher es zu einer, insbesondere kurzfristigen oder vorübergehenden, Verringerung der sich in dem Kältemittelkreis befindenden Wärmemenge oder Energiemenge kommt. Auch auf eine derartige Situation kann in vorteilhafter Weise durch Hinzunahme des zweiten Verdampfers rasch und aufwandsarm reagiert werden.

Ein temporäres Defizit der an dem ersten Kondensator zur Verfügung stehenden Heizleistung kann etwa dadurch bedingt sein, dass an dem zweiten Kondensator, welcher insbesondere im Bereich eines Frontends des Kraftfahrzeugs angeordnet sein und daher auch als Frontendkondensator bezeichnet werden kann, keine genau spezifizierbare beziehungsweise nicht exakt eine gewünschte Menge an Heizleistung abgeführt wird. Vielmehr kann der Fall auftreten, dass durch die zusätzliche Einbindung des zweiten Kondensators oder Frontendkondensators in den Kältemittelkreis im Heizbetrieb des Kältemittelkreises an dem zweiten Kondensator eine bestimmte Mindestabfuhr an Wärme aus dem Kältemittel erfolgt. Daher ist es auch in einer solchen Situation vorteilhaft, wenn durch Beaufschlagen des zweiten Verdampfers mit dem weiteren Teilstrom an entspanntem Kältemittel ein temporäres oder vorübergehendes Defizit der an dem ersten Kondensator zur Verfügung stehenden Heizleistung ausgeglichen oder kompensiert wird.

Des Weiteren ist die an dem zweiten Kondensator abgeführte Wärmemenge von einer Vielzahl von weiteren Faktoren abhängig, etwa von der Luftmasse, mit welcher der zweite Kondensator beaufschlagt wird und von der Temperatur, welche diese üblicherweise durch Umgebungsluft bereitgestellte Luftmasse aufweist. Wenn der zweite Kondensator oder Frontendkondensator mittels eines Lüfters des Kraftfahrzeugs mit einem Luftmassenstrom beaufschlagt wird, so kann eine Stärke des Luftmassenstroms darüber hinaus davon abhängen, ob der Frontendkondensator einen weiteren Wärmeübertrager umfasst, welcher zu Kühlzwecken mit Luft beaufschlagt wird.

Auch derartige Faktoren können folglich dazu beitragen, dass an dem zweiten Kondensator eine größere Wärmeabfuhr stattfindet, als dies im Hinblick auf eine Abfuhr von in Bezug auf den ersten Kondensator überschüssiger Heizleistung wünschenswert ist. Und diese größere Wärmeabfuhr kann durch das Beaufschlagen des zweiten Verdampfers mit dem weiteren Teilstrom des Kältemittels kompensiert werden.

Hierbei ist vorteilhaft, dass der Frontendkondensator oder zweite Kondensator in dem Heizbetrieb weiterhin in den Kältemittelkreis eingebunden bleibt, also von dem Kältemittel durchströmt wird, welches der Verdichter zunächst durch den ersten Kondensator in Form des Heizregisters hindurch fördert. Denn ein Herausnehmen oder Abkoppeln des zweiten Kondensators aus dem Kältemittelkreis im Heizbetrieb macht eine aufwendige, erneute Einregelung des Kältemittelkreises und des Heizbetriebs erforderlich. Dies ist ungünstig und kann vorliegend vermieden werden.

Zudem kann es aufgrund eines Unterbindens des Durchströmtwerdens des zweiten Kondensators zu unerwünschten Temperaturschwankungen an dem ersten Verdampfer kommen. Und wenn nach dem Abkoppeln des zweiten Kondensators aus dem Kältemittelkreis sich in dem zweiten Kondensator befindendes Kältemittel mittels des Verdichters abgesaugt wird, so ist auch dies mit einem entsprechenden Aufwand verbunden. Derartige Störungen im Heizbetrieb des Kältemittelkreises können vorliegend besonders weitgehend unterbunden werden, weil kein häufiger Verschaltungswechsel vorgenommen wird, bei welchem der zweite Kondensator aus dem Kältemittelkreis ausgekoppelt wird.

Das dem, insbesondere als sogenannter Chiller ausgebildeten, zweiten Verdampfer vorgeschaltete zweite Expansionsorgan dient insbesondere zum kurzzeitigen Ausgleich eines Heizleistungsdefizits an dem ersten Kondensator oder Heizregister. Durch entsprechendes Ansteuern dieses zweiten Expansionsorgans kann insbesondere ein Wechsel aus einer Verschaltung des Kältemittelkreises, in welcher ein Wärmeüberschuss über den zweiten Kondensator abgeführt wird, in eine Verschaltung des Kältemittelkreises in vorteilhafter Weise entprellt werden, in welcher ein Durchströmtwerden des zweiten Kondensators unterbunden ist.

Das Vermeiden von häufigen Verschaltungswechseln und eine dementsprechende Entprellung ist daher im Hinblick auf den mittels des Verfahrens erreichbaren verbesserten Heizbetrieb vorteilhaft.

Insbesondere kann das zweite Expansionsorgan auf eine Sollaustrittstemperatur des aus dem ersten Kondensator oder Heizregister austretenden und in den Fahrgastraum des Kraftfahrzeugs einbringbaren Luftstroms beziehungsweise eine entsprechende Kondensationstemperatur des ersten Kondensators geregelt werden, um die in dem Kältemittelkreis zur Verfügung stehende Heizleistung zu erhöhen.

Vorzugsweise ist der zweite Verdampfer als Chiller ausgebildet, welcher Wärme aus einem Kühlmittelstrom aufnimmt. Dann kann nämlich an dem zweiten Verdampfer besonders rasch und besonders viel Wärme in das Kältemittel eingebracht werden. Denn ein flüssiges, insbesondere Wasser enthaltendes, Kühlmittel weist eine vergleichsweise hohe Wärmekapazität auf.

Vorzugsweise wird für die Entprellung und somit das Vermeiden eines häufigen Verschaltungswechsels berücksichtigt, welche Wärmemenge aus dem Kühlmittelstrom an dem zweiten Verdampfer oder Chiller aufgenommen werden kann. Hier spielt zum einen die Temperatur des Kühlmittelstroms sowie die Zeitdauer eine Rolle, während welcher ein Wärmeübergang von dem Kühlmittelstrom auf das Kältemittel stattfindet. Insbesondere durch eine Vorgabe von Schwellenwerten im Hinblick auf die aus dem Kühlmittelstrom aufnehmbare Wärmemenge kann ein häufiges Auskoppeln des zweiten Kondensators oder Frontendkondensators aus dem Kältemittelkreis im Heizbetrieb vermieden werden.

Vorzugsweise wird vor dem Beaufschlagen des zweiten Verdampfers mit dem weiteren Teilstrom zunächst zum Erhöhen der an dem ersten Kondensator zur Verfügung stehenden Heizleistung ein durchströmbarer Querschnitt einer Drosseleinrichtung verringert. Die Drosseleinrichtung ist bei einer in dem Heizbetrieb vorliegenden Strömungsrichtung des Kältemittels durch den Kältemittelkreis stromabwärts des ersten Kondensators und stromaufwärts des zweiten Kondensators angeordnet. Dem liegt die Erkenntnis zugrunde, dass durch ein Verringern des durchströmbaren Querschnitts der Drosseleinrichtung der Druck des Kältemittels im Bereich des ersten Kondensators und somit auch die Temperatur des Kältemittels im Bereich des ersten Kondensators erhöht werden kann. In analoger Weise kann durch ein Erhöhen oder Vergrößern des durchströmbaren Querschnitts der Drosseleinrichtung die an dem ersten Kondensator zur Verfügung stehende Heizleistung verringert werden. Auf diese Weise lässt sich sehr einfach und rasch eine Aufteilung der an dem ersten Kondensator beziehungsweise Heizregister und dem zweiten Kondensator beziehungsweise Frontendkondensator jeweils abzuführenden Wärmemengen einstellen.

Insbesondere kann die Drosseleinrichtung als dem Heizregister oder ersten Kondensator nachgeschaltetes Expansionsventil ausgebildet sein, mittels welchem sich eine Sollaustrittstemperatur, also eine Solltemperatur des stromabwärts des ersten Kondensators oder Heizregisters vorliegenden Luftstroms, beziehungsweise eine Kondensationstemperatur an dem ersten Kondensator oder Heizregister einstellen oder regeln lässt.

Insbesondere wenn zunächst zum Erhöhen der an dem ersten Kondensator zur Verfügung stehenden Heizleistung der durchströmbare Querschnitt der Drosseleinrichtung verringert wird, bevor überhaupt der zweite Teilstrom des Kältemittels dem zweiten Verdampfer zugeführt wird, lässt sich ein sehr gleichmäßiger Heizbetrieb des Kältemittelkreises erreichen.

Vorzugsweise wird ein Sollwert einer Temperatur des ersten Kondensators, bis zu welcher die Drosseleinrichtung geöffnet bleibt, auf einen höheren Wert eingestellt als ein Sollwert der Temperatur des ersten Kondensators, bei deren Erreichen das zweite Expansionsorgan geöffnet wird. Auf diese Weise kann insbesondere sichergestellt werden, dass das zweite Expansionsorgan in einem stationären Heizbetrieb des Kältemittelkreises geschlossen bleibt, solange der erste Kondensator eine ausreichende Heizleistung bereitstellt, um den Sollwert der Temperatur zu erreichen. Dies ist im Hinblick auf einen gleichmäßigen und stabilen Heizbetrieb des Kältemittelkreises vorteilhaft.

Vorzugsweise wird der durchströmbare Querschnitt der Drosseleinrichtung in Abhängigkeit von einem Sollwert einer Temperatur eingestellt, auf welche der Luftstrom mittels des ersten Kondensators erwärmt werden soll. So kann sehr einfach ein entsprechender Heizwunsch berücksichtigt werden, welcher beispielsweise von einem sich in dem Fahrgastraum befindenden Insassen des Kraftfahrzeugs vorgegeben werden kann.

Die Drosseleinrichtung kann vorzugsweise in eine Sperrstellung verbracht werden, in welcher ein Durchströmtwerden des zweiten Kondensators unterbunden ist. Das Verbringen der Drosseleinrichtung in die Sperrstellung wird vorzugsweise lediglich dann vorgenommen, wenn weder durch ein Verringern des durchströmbaren Querschnitts der Drosseleinrichtung noch durch das sich zeitlich anschließende Beaufschlagen des zweiten Verdampfers mit dem weiteren Teilstrom des Kältemittels an dem ersten Kondensator eine vorgegebene Heizleistung bereitstellbar ist. Auf diese Weise ist sichergestellt, dass es nur vergleichsweise selten zu einem Abkoppeln des zweiten Kondensators beziehungsweise Ausbinden des zweiten Kondensators aus dem Kältemittelkreis kommt. Auch dies ist im Hinblick auf einen möglichst störungsfreien und gleichmäßigen Heizbetrieb des Kältemittelkreises vorteilhaft.

Vorzugsweise wird eine Öffnungsweite des ersten Expansionsorgans in Abhängigkeit von dem weiteren Abkühlen des Kältemittels eingestellt, welches mittels des zweiten Kondensators bewirkbar ist. Bei einer geringen Öffnungsweite des ersten Expansionsorgans kommt es somit zu einem stärkeren weiteren Abkühlen des Kältemittels in dem zweiten Kondensator als bei einer größeren Öffnungsweite des ersten Expansionsorgans. Folglich lässt sich das weitere Abkühlen des Kältemittels sehr zielgerichtet einstellen. Dies ist für eine effiziente Entfeuchtung des dem Fahrgastraum oder Innenraum des Kraftfahrzeugs zuführbaren Luftstroms vorteilhaft.

Des Weiteren kann auf diese Weise insbesondere ein Unterkühlen des bereits kondensierten Kältemittels in dem zweiten Kondensator erreicht werden. Ein Regelziel eines derartigen Unterkühlens kann sich insbesondere nach der Höhe der gesamten Kondensatorlast oder Kondensatorleistung richten und somit eine Funktion dieser Kondensatorlast sein. Ein Wertebereich, innerhalb dessen das Regelziel variieren kann, kann insbesondere zwischen 4 K und 12 K liegen.

Vorzugsweise werden zum Einstellen eines Luftmassenstroms, mit welchem der zweite Kondensator beaufschlagt wird, eine an dem ersten Kondensator aus dem Kältemittel abgeführte Wärmemenge und eine Differenz zwischen einer Temperatur des Kältemittels an einem Eintritt in den zweiten Kondensator und einer Temperatur der Umgebungsluft berücksichtigt. Auf diese Weise kann sehr genau ermittelt werden, wie groß der Luftmassenstrom sein soll, mit dem der zweite Kondensator, insbesondere Frontendkondensator, beaufschlagt werden soll. Insbesondere kann eine überschüssige Verlustleistung sehr exakt ermittelt werden, welche an dem zweiten Kondensator abgeführt werden soll.

Des Weiteren kann der zum Abführen der überschüssigen Verlustleistung beziehungsweise des Heizüberschusses einzustellende Luftmassenstrom einfach berechnet und eingestellt werden. Die gesamte über den ersten Kondensator und den zweiten Kondensator abzuführende Wärmemenge kann beispielsweise aus der Summe der Leistungen der Verdampfer sowie der Leistung des Verdichters berechnet werden. Hierbei kann näherungsweise davon ausgegangen werden, dass dann, wenn der Verdichter als elektrischer Kältemittelverdichter ausgebildet ist, eine elektrische Leistung des Verdichters im Wesentlichen der mittels des Verdichters beziehungsweise aufgrund des Betreibens des Verdichters in das Kältemittel eingebrachten Wärmemenge entspricht. Und bei der jeweiligen Verdampferleistung handelt es sich um die Wärmemenge, welche an dem jeweiligen Verdampfer von dem Kältemittel aufgenommen wird. Diese gesamte Wärmemenge in Form der Summe der Leistungen der Verdampfer und der Leistung des Verdichters liegt dementsprechend in dem Kältemittelkreis vor. Wenn von dieser gesamten Wärmemenge die Heizleistung abgezogen wird, welche an dem ersten Kondensator oder Heizregister an den Luftstrom abgegeben wird, so lässt sich die an dem zweiten Kondensator oder Frontendkondensator abzuführende Leistung einfach ermitteln.

Die mittels des zweiten Kondensators oder Frontendkondensators abzuführende Wärmemenge oder Leistung kann etwa mit Hilfe eines für den zweiten Kondensator spezifischen Kennfelds in einen Soll-Luftmassenstrom gewandelt werden. In einem solchen Kennfeld kann insbesondere die Differenz zwischen der Temperatur des Kältemittels an dem Eintritt in den zweiten Kondensator und der Temperatur der Umgebungsluft berücksichtigt werden.

Der Soll-Luftmassenstroms, mit welchem der zweite Kondensator beaufschlagt werden soll, kann insbesondere durch Ansteuern eines dem zweiten Kondensator zugeordneten Lüfters und/oder durch Öffnen einer diesem Kondensator zugeordneten Jalousie oder Kühlerjalousie bereitgestellt werden. Dementsprechend kann etwa durch Erhöhen einer Drehzahl des Lüfters oder durch weiteres Öffnen der Kühlerjalousie ein bestimmter Luftmassenstrom bereitgestellt werden, mit welchem der zweite Kondensator beaufschlagt wird. Wenn keine Jalousie oder Kühlerjalousie an einem den zweiten Kondensator umfassenden Kühler vorhanden ist, so kann auch lediglich durch entsprechendes Einstellen einer Drehzahl des dem zweiten Kondensator zugeordneten Lüfters der gewünschte Luftmassenstrom eingestellt werden.

Vorzugsweise werden zum Ermitteln eines Überschusses und/oder eines Defizits der an dem ersten Kondensator zur Verfügung stehenden Heizleistung eine Temperatur und eine Masse des dem ersten Kondensator zugeführten Luftstroms, eine durch den ersten Kondensator zu bewirkende Erwärmung des Luftstroms und eine in den Kältemittelkreis eingebrachte Wärmemenge berücksichtigt. Auf diese Weise lässt sich sehr einfach und präzise feststellen, ob an dem ersten Kondensator ein Überschuss an Heizleistung zur Verfügung steht oder ein Defizit an Heizleistung vorliegt.

Dem liegt die Erkenntnis zugrunde, dass in dem Kältemittelkreis Leistungen berechnet und bilanziert werden können, wobei der physikalische Zusammenhang:

$$Q_p = mf * cp * \Delta T$$

herangezogen werden kann, wobei gilt: $Q_p$ = Wärmeleistung, mf = Luftmasse, cp = Wärmekapazität

der Luft und ∆T = Unterschied der Temperatur der Luftmasse beziehungsweise des Luftstroms am Eintritt und am Austritt des ersten Verdampfers.

Teilweise können somit gemessene Ist-Leistungen herangezogen werden, wobei zur Ermittlung der Temperaturdifferenz ∆T Eingangsgrößen von Temperatursensoren verwendet werden können. Des Weiteren können angeforderte Soll-Leistungen berücksichtigt werden. Hierbei kann insbesondere eine Mischberechnung vorgenommen werden, bei welcher zur Berechnung einer Temperaturdifferenz Messwerte eines Temperatursensors und ein Heizwunsch beziehungsweise Kühlwunsch herangezogen werden können. Diese Soll-Leistungen sind insbesondere durch die Wärmeübertrager in Form des ersten Verdampfers sowie des ersten Kondensators oder Heizregisters bereitzustellen, um den in den Fahrgastraum einzubringenden Luftstrom entsprechend zu konditionieren.

Wenn in dem Heizbetrieb der Heizüberschuss beziehungsweise eine Überversorgung an dem als Heizregister dienenden ersten Kondensator festgestellt wird, so kann der zweite Kondensator als zusätzliche Wärmesenke in Reihe zu dem ersten Kondensator verschaltet und dementsprechend von dem Kältemittel durchströmt werden, welches der Verdichter durch den Kältemittelkreis hindurch fördert. Eine derartige Überversorgung kann dann auftreten, wenn die sich in dem Kältemittelkreis befindende beziehungsweise in den Kältemittelkreis eingebrachte Wärmemenge größer ist als die Wärmemenge, die an dem als Wärmesenke dienenden ersten Kondensator an den Luftstrom abgeführt wird. In diesem Fall liegt quasi eine Übererfüllung des Heizwunsches vor.

Die an dem ersten Kondensator beziehungsweise Heizregister von dem Luftstrom aufzunehmende Wärmemenge kann aus dem Heizwunsch sowie der Luftmasse (mf) ermittelt werden, mit welcher der erste Kondensator beaufschlagt wird, wenn der in den Fahrgastraum des Kraftfahrzeugs einzubringende Luftstrom den ersten Kondensator durchströmt. Die Stärke des Luftstroms kann hierbei insbesondere von einer Steuerungseinrichtung etwa in Form eines Klimasteuergeräts des Kraftfahrzeugs vorgegeben werden, welches einen dem ersten Kondensator zugeordneten Lüfter ansteuert. Die in den Kältemittelkreis eingebrachte und sich somit in dem Kältemittelkreis befindende Energie kann ermittelt werden, indem die an dem ersten Verdampfer aufgenommene Wärmemenge sowie die Leistung des Verdichters aufsummiert werden.

Das von dem Klimasteuergerät ausgegebene Ansteuersignal zum Ansteuern des Lüfters kann insbesondere von einem Insassen des Fahrgastraums über eine entsprechende Bedieneinrichtung des Kraftfahrzeugs eingestellt werden.

Vorzugsweise wird in dem Heizbetrieb durch Betätigen wenigstens einer Ventileinrichtung des Kältemittelkreises dafür gesorgt, dass ein gesamter von dem Verdichter geförderter Massenstrom des Kältemittels zumindest durch den ersten Kondensator hindurchströmt. Dies ist einem effizienten Heizbetrieb zuträglich. Als Ventileinrichtung kann wenigstens ein Mehrwegeventil zum Einsatz kommen. Zusätzlich oder alternativ kann die Ventileinrichtung durch Absperrventile bereitgestellt sein, welche dafür sorgen, dass in dem Heizbetrieb der gesamte von dem Verdichter geförderte Massenstrom des Kältemittels dem ersten Kondensator zugeführt wird.

Vorzugsweise wird in dem Heizbetrieb eine direkte fluidische Kopplung des ersten Kondensators und des zweiten Kondensators mit der Saugseite des Verdichters unterbunden. Ein derartiges Verbinden des ersten Kondensators und/oder des zweiten Kondensators mit der Saugseite des Verdichters kann zwar bei anderen Betriebsweisen des Kältemittelkreises als dem Heizbetrieb sinnvoll sein. In dem Heizbetrieb sorgt jedoch das Unterbinden der direkten fluidischen Kopplung des ersten Kondensators und des zweiten Kondensators mit der Saugseite des Verdichters dafür, dass das Kältemittel den ersten Verdampfer durchströmt oder den ersten Verdampfer und den zweiten Verdampfer parallel durchströmt, bevor das entspannte Kältemittel zu der Saugseite des Verdichters gelangt. Dies ist für einen effizienten Heizbetrieb des Kältemittelkreises vorteilhaft.

Vorzugsweise werden in dem Heizbetrieb für ein Einstellen einer Förderleistung des Verdichters ein auf der Saugseite des Verdichters vorhandener Druck und eine Temperatur des Luftstroms stromabwärts des ersten Verdampfers berücksichtigt. Auf diese Weise kann sehr effizient eine gewünschte Verringerung der Feuchte des in den Fahrgastraum des Kraftfahrzeugs einbringbaren Luftstroms eingestellt werden.

Insbesondere kann hierbei eine Kaskadenregelung realisiert werden, bei welcher in einem inneren Regelkreis auf einen Saugdruck des Verdichters geregelt wird und in einem äußeren Regelkreis auf die Temperatur des Luftstroms stromabwärts des ersten Verdampfers. Insbesondere durch eine derartige Kaskadenregelung oder Regelungskaskade kann sichergestellt werden, dass ein für die Verringerung der Feuchte des Luftstroms einzustellender Saugdruck zuverlässig erreicht wird. Dem liegt die Erkenntnis zugrunde, dass bei vorzugsweise vorgesehenen Kaskadenregelung der innere Regelkreis sehr schnell ist, also sehr rasch eingeregelt werden kann, während die Regelung der Temperatur des Luftstroms langsamer erfolgt.

Beispielsweise kann durch eine Erhöhung einer Drehzahl des Verdichters eine Absenkung des Drucks auf der Saugseite des Verdichters und somit eine Reduzierung der Temperatur des Luftstroms stromabwärts des ersten Verdampfers erreicht werden.

Das erfindungsgemäße Kraftfahrzeug weist einen Kältemittelkreis auf, welcher einen Verdichter umfasst. Mittels des Verdichters ist in einem Heizbetrieb des Kältemittelkreises ein Kältemittel durch einen ersten Kondensator des Kältemittelkreises hindurch förderbar. Mittels des ersten Kondensators ist ein in einen Fahrgastraum des Kraftfahrzeugs einbringbarer Luftstrom erwärmbar. Mittels des Verdichters ist das Kältemittel in dem Heizbetrieb durch einen zweiten Kondensator des Kältemittelkreises hindurch förderbar, wobei mittels des zweiten Kondensators eine weitere Abkühlung des Kältemittels bewirkbar ist. Zumindest ein Teilstrom des von dem zweiten Kondensator her kommenden Kältemittels ist mittels eines ersten Expansionsorgans des Kältemittelkreises entspannbar und einem ersten Verdampfer des Kältemittelkreises zuführbar. Mittels des ersten Verdampfers ist eine Feuchte des in den Fahrgastraum des Kraftfahrzeugs einbringbaren Luftstroms verringerbar. Der zweite Kondensator ist in dem Heizbetrieb von dem Kältemittel durchströmbar, welches mittels des Verdichters zunächst durch den ersten Kondensator hindurch förderbar ist. Die Steuerungseinrichtung des Kraftfahrzeugs ist dazu ausgebildet, zum Erhöhen einer an dem ersten Kondensator zur Verfügung stehenden Heizleistung ein Entspannen eines weiteren Teilstroms des von dem zweiten Kondensator her kommenden Kältemittels mittels eines zweiten Expansionsorgans des Kältemittelkreises zu bewirken. Des Weiteren ist die Steuerungseinrichtung dazu ausgebildet, ein Zuführen des weiteren Teilstroms zu einem zweiten Verdampfer des Kältemittelkreises zu bewirken. Das von den Verdampfern kommende Kältemittel ist einer Saugseite des Verdichters zuführbar.

In dem Kraftfahrzeug ist somit ein verbesserter Heizbetrieb des Kältemittelkreises realisierbar, denn die Steuerungseinrichtung ist dazu ausgebildet, den Kältemittelkreis gemäß dem erfindungsgemäßen Verfahren oder einer Ausgestaltung desselben zu betreiben.

Zu der Erfindung gehört auch die Steuerungseinrichtung des Kraftfahrzeugs. Die Steuerungseinrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren weist die Prozessoreinrichtung Programmcode auf, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die für das erfindungsgemäße Verfahren beschriebenen Vorteile und bevorzugten Ausführungsformen gelten auch für das erfindungsgemäße Kraftfahrzeug und umgekehrt.

Zu der Erfindung gehören demnach auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus ausgestaltet.

Im Folgenden sind Ausführungsbeispiele der Erfindung beschrieben. Hierzu zeigt:

Fig. 1    schematisch einen Kältemittelkreis eines Kraftfahrzeugs, welcher in einem Heizbetrieb betreibbar ist; und

Fig. 2    stark schematisiert das den Kältemittelkreis aufweisende Kraftfahrzeug.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

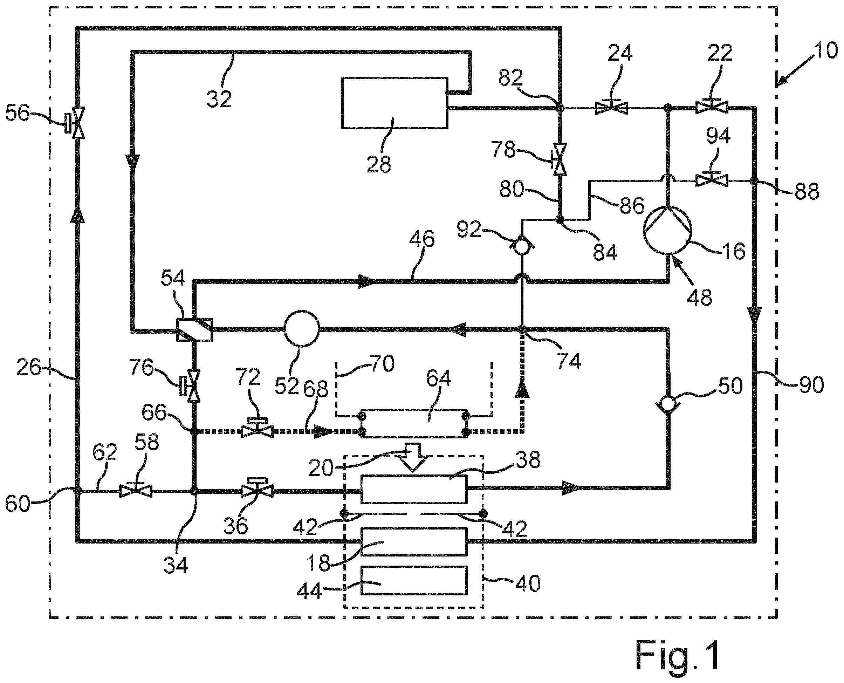

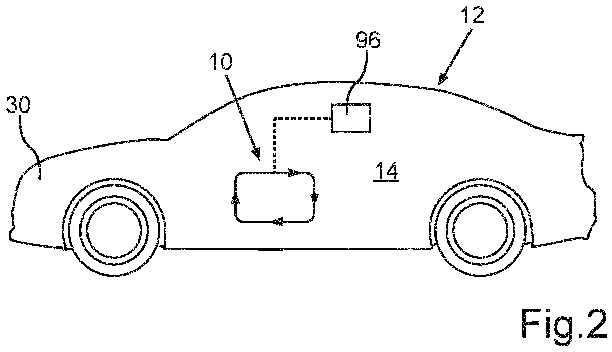

In Fig. 1 ist schematisch ein Kältemittelkreis 10 eines in Fig. 2 ebenfalls stark schematisiert dargestellten Kraftfahrzeugs 12 gezeigt. Der Kältemittelkreis 10 kann zum einen in einem Klimaanlagenbetrieb genutzt werden, in welchem in einen Fahrgastraum 14 des Kraftfahrzeugs 12 (vergleiche Fig. 2) in an sich bekannter Weise gekühlte Umgebungsluft eingebracht wird. Zur Erläuterung eines derartigen Klimaanlagenbetriebs des Kältemittelkreises 10 wird auf die eingangs genannte DE 10 2018 213 232 A1 verwiesen.

Nachfolgend soll demgegenüber ein Heizbetrieb des Kältemittelkreises 10 erläutert werden, welcher sich von dem Klimaanlagenbetrieb des Kältemittelkreises 10 unterscheidet. In diesem Heizbetrieb fördert ein Verdichter 16 des Kältemittelkreises 10 das verdichtete Kältemittel zunächst hin zu einem ersten Kondensator 18 des Kältemittelkreises 10. Der erste Kondensator 18 fungiert als Gaskühler und kann auch als Heizregister bezeichnet werden. Wenn ein in den Fahrgastraum 14 des Kraftfahrzeugs 12 (vergleiche Fig. 2) einbringbarer Luftstrom 20 den von dem verdichteten Kältemittel durchströmten ersten Kondensator 18 überströmt, so wird an den Luftstrom 20 Wärme abgegeben und folglich der Luftstrom 20 erwärmt. Folglich wird in dem Heizbetrieb des Kältemittelkreises 10 der erste Kondensator 18 als Wärmequelle für den Luftstrom 20 genutzt, welcher in den Fahrgastraum 14 des Kraftfahrzeugs 12 eingebracht wird.

Um in dem Heizbetrieb eine Strömung des Kältemittels von einer Hochdruckseite des Verdichters 16 zu dem ersten Kondensator 18 zu bewirken, können ein erstes Absperrventil 22 geöffnet und demgegenüber ein zweites Absperrventil 24 geschlossen werden. Die vorliegend beispielhaft gezeigten Absperrventile 22, 24 können Bestandteile einer Ventileinrichtung des Kältemittelkreises 10 sein.

Von dem ersten Kondensator 18 aus strömt in dem Heizbetrieb das Kältemittel über einen Leitungszweig 26 des Kältemittelkreises 10 weiter hin zu einem zweiten Kondensator 28 des Kältemittelkreises 10, welcher in dem Heizbetrieb zu dem ersten Kondensator 18 in Reihe geschaltet ist. Der zweite Kondensator 28 kann insbesondere im Bereich eines Frontends 30 des Kraftfahrzeugs 12 (vergleiche Fig. 2) angeordnet sein und kann daher auch als Frontendkondensator bezeichnet werden. In dem zweiten Kondensator 28 findet aufgrund der Beaufschlagung desselben mit Umgebungsluft eine weitere Abkühlung des Kältemittels statt. Über eine an den zweiten Kondensator 28 angeschlossene Auslassleitung 32 strömt das Kältemittel in dem Heizbetrieb weiter zu einer Verzweigungsstelle 34 des Kältemittelkreises 10. Von der Verzweigungsstelle 34 gelangt das Kältemittel über ein erstes Expansionsorgan 36, welches beispielsweise als Expansionsventil ausgebildet ist, hin zu einem ersten Verdampfer 38 des Kältemittelkreises 10.

Das mittels des ersten Expansionsorgans 36 entspannte Kältemittel nimmt in dem ersten Verdampfer 38 Wärme aus dem Luftstrom 20 auf und sorgt hierbei für eine Verringerung der Feuchte des in den Fahrgastraum 14 des Kraftfahrzeugs 12 einbringbaren Luftstroms 20. Der erste Verdampfer 38 kann daher vorliegend auch als Innenraum-Verdampfer bezeichnet werden.

Eine Eingangsgröße für eine Abkühlung des Luftstroms 20 an dem ersten Verdampfer 38 oder Innenraum-Verdampfer kann im Bereich von etwa 3 °C bis etwa 15 °C liegen, um im Luftstrom 20 enthaltene Feuchte zu kondensieren und somit die Feuchte des Luftstroms 20 zu verringern. In Strömungsrichtung des Luftstroms 20 durch ein Klimagerät 40 des Kraftfahrzeugs 12 betrachtet kann der als Heizregister dienende erste Kondensator 18 dem ersten Verdampfer 38 oder Innenraum-Verdampfer nachgelagert sein (vergleiche Fig. 1).

Beispielsweise mittels schematisch gezeigter Luftklappen 42, welche vorliegend in Strömungsrichtung des Luftstroms 20 zwischen dem ersten Verdampfer 38 und dem ersten Kondensator 18 angeordnet sind, kann ein Anteil der in den Fahrgastraum 14 einzubringenden Luftmenge eingestellt werden, welche über den als Heizregister dienenden ersten Kondensator 18 wieder erhitzt werden soll. Hierbei kann als Funktionseingangsgröße ein geforderter Heizwunsch einen Wert zwischen beispielsweise 20 °C und 60 °C haben.

In dem Klimagerät 40 kann eine weitere Heizeinrichtung 44 angeordnet sein, welche beispielsweise als elektrische Zusatzheizung ausgebildet sein kann. Eine derartige elektrische Zusatzheizung kann insbesondere vorgesehen sein, wenn das Kraftfahrzeug 12 als Elektrofahrzeug oder Hybridfahrzeug ausgebildet ist, wobei die elektrische Heizeinrichtung 44 von einem elektrischen Energiespeicher des Kraftfahrzeugs 12 versorgt wird, welcher elektrische Energie für einen der Fortbewegung des Kraftfahrzeugs 12 dienenden Antriebsmotor zur Verfügung stellt.

Insbesondere bei Ausbildung des Kraftfahrzeugs 12 als Elektrofahrzeug oder Hybridfahrzeug kann der Verdichter 16 als elektrischer Kältemittelverdichter ausgebildet sein, dessen Drehzahl geregelt werden kann.

In dem Heizbetrieb wird das entspannte Kältemittel von dem ersten Verdampfer 38 her kommend über eine Rückführleitung 46 wieder einer Saugseite 48 des Verdichters 16 zugeführt.

Wie in Fig. 1 gezeigt, können in der Rückführleitung 46 ein Rückschlagventil 50 und/oder ein Sammler 52 angeordnet sein. Des Weiteren kann mittels eines (optionalen) inneren Wärmetauschers 54 eine Effizienz des Kältemittelkreises 10 verbessert werden.

Vorliegend ist in Strömungsrichtung des Kältemittels durch den Kältemittelkreis 10 im Heizbetrieb betrachtet stromabwärts des ersten Kondensators 18 und stromaufwärts des zweiten Kondensators 28 eine Drosseleinrichtung 56 in dem Leitungszweig 26 angeordnet. Ein durchströmbarer Querschnitt der Drosseleinrichtung 56, welche beispielsweise als Expansionsventil ausgebildet sein kann, kann verringert werden, um in dem Heizbetrieb eine an dem ersten Kondensator 18 zur Verfügung stehende Heizleistung des Kältemittelkreises 10 zu erhöhen. Denn wenn in dem Leitungszweig 26 stromaufwärts der Drosseleinrichtung 56 und somit auch im Bereich des ersten Kondensators 18 ein höherer Druck des Kältemittels vorliegt als stromabwärts der Drosseleinrichtung 56 in dem Leitungszweig 26, so ist auch die Temperatur des den ersten Kondensator 18 durchströmenden Kältemittels höher.

In entsprechender Weise sorgt ein stärkeres Öffnen der Drosseleinrichtung 56 und somit ein Vergrößern des durchströmbaren Querschnitts der Drosseleinrichtung 56 für eine Verringerung der Temperatur des ersten Kondensators 18. Dementsprechend kann eine Lastaufteilung zwischen dem ersten Kondensator 18 und dem zweiten Kondensator 28 durch Ansteuern der Drosseleinrichtung 56 vorgenommen werden. Über diese Lastaufteilung kann somit darauf Einfluss genommen werden, welche Wärmemenge an dem ersten Kondensator 18 und an dem zweiten Kondensator 28 jeweils abgeführt wird.

Es kann vorkommen, dass trotz eines vergleichsweise weitgehenden Verringerns des durchströmbaren Querschnitts der Drosseleinrichtung 56 der erste Kondensator 18 nicht die gewünschte Heizleistung bereitstellt. In diesem Fall kann prinzipiell die Drosseleinrichtung 56 komplett geschlossen und demgegenüber ein Absperrventil 58 geöffnet werden, welches in einer Leitung 62 angeordnet ist, die von einer stromaufwärts der Drosseleinrichtung 56 in dem Leitungszweig 26 angeordneten Abzweigstelle 60 hin zu der Verzweigungsstelle 34 führt. Dann durchströmt das von dem Verdichter 16 geförderte Kältemittel jedoch nicht mehr zunächst den ersten Kondensator 18 und anschließend den zweiten Kondensator 28. Vielmehr wird das von dem ersten Kondensator 18 kommende Kältemittel direkt über das erste Expansionsorgan 36 dem ersten Verdampfer 38 zugeführt.

Ein solcher Verschaltungswechsel ist in dem Heizbetrieb des Kältemittelkreises 10 ungünstig und kann vorliegend besonders weitgehend vermieden werden. Denn selbst dann, wenn ein insbesondere temporäres beziehungsweise vorübergehendes Defizit an Heizleistung an dem ersten Kondensator 18 auftritt, kann dennoch der zweite Kondensator 28 weiterhin von dem Kältemittel durchströmt werden. Hierfür kann in dem Heizbetrieb des Kältemittelkreises 10 durch Hinzunahme eines zweiten Verdampfers 64 die in dem Kältemittelkreis 10 vorhandene Wärmemenge erhöht werden.

Von der Auslassleitung 32 zweigt vorliegend an einer weiteren Abzweigstelle 66 ein weiterer Leitungszweig 68 des Kältemittelkreises 10 ab. In diesem Leitungszweig 68 ist der zweite Verdampfer 64 angeordnet, welcher vorliegend als sogenannter Chiller ausgebildet ist. Dementsprechend dient dieser zweite Verdampfer 64 dem Kühlen eines Kühlmittelstroms.

In Fig. 1 ist ein entsprechender Ausschnitt aus einem von dem Kühlmittel durchströmten Kühlmittelkreis 70 des Kraftfahrzeugs 12 schematisch angedeutet. Mit anderen Worten nimmt der zweite Verdampfer 64 Wärme aus dem Kühlmittelstrom auf, welcher den Kühlmittelkreis 70 durchströmt. Auf diese Weise erfolgt ein Eintrag von Wärme in das Kältemittel, welches nach dem Durchströmen des zweiten Verdampfers 64 zu der Saugseite 48 des Verdichters 16 zurückgeführt wird.

In dem Leitungszweig 68 ist ein zweites Expansionsorgan 72 angeordnet, welches dem zweiten Verdampfer 64 in Strömungsrichtung des Kältemittels vorgeschaltet ist. Mittels des zweiten Expansionsorgans 72 wird das in den zweiten Verdampfer 64 einströmende Kältemittel entspannt. Das zweite Expansionsorgan 72 kann insbesondere als Expansionsventil ausgebildet sein.

Wenn das zweite Expansionsorgan 72 geöffnet ist, so durchströmt nicht mehr der gesamte von dem zweiten Kondensator 28 her kommende Massenstrom des Kältemittels den ersten Verdampfer 38. Vielmehr durchströmt ein erster Teilstrom des von dem zweiten Kondensator 28 her kommenden Kältemittels den ersten Verdampfer 38 und ein zweiter Teilstrom durchströmt parallel dazu den zweiten Verdampfer 64. An einer Einmündungsstelle 74 mündet der Leitungszweig 68 stromabwärts des zweiten Verdampfers 64 in die Rückführleitung 46 ein. Dementsprechend wird in diesem Betriebszustand des Kältemittelkreises 10 das von den beiden Verdampfern 38, 64 kommende Kältemittel der Saugseite 48 des Verdichters 16 zugeführt.

Das zweite Expansionsorgan 72 kann insbesondere dann geöffnet werden, wenn aufgrund einer Erhöhung des Heizwunsches oder aufgrund einer Reduzierung der sich in dem Kältemittelkreis 10 befindenden Energiemenge oder Wärmemenge ein temporäres Defizit an Wärme an dem ersten Kondensator 18 ausgeglichen werden soll.

Durch das Hinzunehmen des zweiten Verdampfers 64, bei welchem in dem Heizbetrieb des Kältemittelkreises 10 auch der zweite Verdampfer 64 von Kältemittel durchströmt wird und zwar von dem zweiten Teilstrom des Kältemittels, kann vermieden werden, dass es zu einem häufigen Verschaltungswechsel kommt. Bei dem vorliegend besonders weitgehend vermeidbaren Verschaltungswechsel des Kältemittelkreises 10 wird durch vollständiges Schließen der Drosseleinrichtung 56 und Öffnen des Absperrventils 58 der zweite Kondensator 28 aus dem Kältemittelkreis 10 ausgebunden beziehungsweise ausgekoppelt.

Es können Schwellenwerte vorgegeben werden, welche einerseits eine Entnahmeleistung und andererseits eine Entnahmezeit angeben. Die Entnahmeleistung beschreibt hierbei, welche Wärmemenge aus dem Kühlwasser beziehungsweise Kühlmittelstrom aufgenommen wird, wenn der zweite Verdampfer 64 von dem zweiten Teilstrom des Kältemittels durchströmt und mit dem Kühlmittelstrom beaufschlagt wird. Und die Entnahmezeit gibt an, wie lange eine derartige Aufnahme von Wärme aus dem Kühlmittelstrom oder Kühlwasserstrom durch den zweiten Verdampfer 64 stattfindet. Wenn entsprechende Schwellenwerte überschritten werden, so kann vorgesehen sein, dass die mit Bezug auf Fig. 1 beschriebene Verschaltung des Kältemittelkreises 10 verändert wird. Es kann also insbesondere bei Vorliegen eines größeren und/oder länger andauernden Heizwärmedefizits an dem ersten Kondensator 18 ein Wechsel hin zu einer Verschaltung vorgenommen werden, bei welcher der zweite Kondensator 28 ausgebunden ist beziehungsweise ein Durchströmtwerden des zweiten Kondensators 28 unterbunden ist.

Wenn ein in Fig. 1 gezeigtes (optionales) Expansionsventil 76 in der Auslassleitung 32 des Kältemittelkreises 10 vorhanden ist, welches vorliegend der weiteren oder zweiten Abzweigstelle 66 vorgeschaltet ist, so können zum Ausbinden oder Auskoppeln des zweiten Kondensators 28 einerseits die Drosseleinrichtung 56 und andererseits das Expansionsventil 76 geschlossen werden. Zusätzlich oder alternativ kann ein Absperrventil 78 des Kältemittelkreises 10 in eine Schließstellung verbracht werden, welches vorliegend in einer Verbindungsleitung 80 angeordnet ist.

Die Verbindungsleitung 80 verbindet vorliegend eine in dem Leitungszweig 26 stromaufwärts des zweiten Kondensators 28 angeordnete Verzweigungsstelle 82 mit einer weiteren Verzweigungsstelle 84. Die zweite oder weitere Verzweigungsstelle 84 befindet sich vorliegend wiederum in einem Leitungszweig 86, welcher von der Einmündungsstelle 74 zu einer weiteren Einmündungsstelle 88 führt.

Die weitere Einmündungsstelle 88 befindet sich vorliegend in einem weiteren Leitungszweig 90 des Kältemittelkreises 10, welcher von der Druckseite des Verdichters 16 hin zu dem ersten Kondensator 18 führt und bei geöffnetem ersten Absperrventil 22 von dem Kältemittel durchströmt wird, das der Verdichter 16 fördert. In dem Leitungszweig 86 befindet sich vorliegend zwischen der Einmündungsstelle 74 und der Verzweigungsstelle 84 ein Rückschlagventil 92, welches aufgedrückt werden kann, wenn Kältemittel die Verbindungsleitung 80 durchströmt. Des Weiteren ist vorliegend in dem Leitungszweig 86 zwischen der Verzweigungsstelle 84 und der Einmündungsstelle 88 ein weiteres Absperrventil 94 angeordnet. Die Absperrventile 78, 94 können ebenso wie das erste Absperrventil 22 und das zweite Absperrventil 24 Bestandteile der Ventileinrichtung des Kältemittelkreises 10 sein.

Die vorstehend beschriebenen Leitungsführungen und dergleichen können in Varianten des Kältemittelkreises 10 von der beispielhaft erläuterten Anordnung der jeweiligen Ventile, Leitungszweige, Verbindungsleitungen, Verzweigungsstellen, Einmündungsstellen und dergleichen abweichen. Es kann nämlich auch auf andere Art und Weise als vorliegend beispielhaft erläutert erreicht werden, dass in dem Heizbetrieb das von dem Verdichter 16 geförderte Kältemittel ausschließlich über den Leitungszweig 90 dem ersten Kondensator 18 zugeführt wird.

Vorliegend wird der zweite Kondensator 28 in dem Heizbetrieb des Kältemittelkreises 10 vorzugsweise genutzt, wenn es an dem ersten Kondensator 18 oder Heizregister zu einer Übererfüllung eines Heizwunsches kommt beziehungsweise die in den Kältemittelkreis 10 eingebrachte Energiemenge oder Wärmemenge größer ist als die Wärmemenge, welche an dem ersten Kondensator 18 an den Luftstrom 20 abgegeben werden soll. Etwa bei einer derartigen Überversorgung kann an dem zweiten Kondensator 28 oder Frontendkondensator überschüssige Wärme an die Umgebungsluft abgegeben werden.

In Fig. 2 ist das Kraftfahrzeug 12 mit dem Kältemittelkreis 10 sowie einer Steuerungseinrichtung 96 schematisch gezeigt. Die Steuerungseinrichtung 96 dient der Ansteuerung der unterschiedlichen Komponenten des Kältemittelkreises 10, so dass die vorstehend erläuterten Funktionalitäten des Kältemittelkreises 10 ausgeführt werden können.

Insgesamt zeigen die Beispiele, wie bei dem Kältemittelkreis 10 mit dualen Kondensatoren in Form des ersten Kondensators 18 und des zweiten Kondensators 28 eine Lastverteilung bereitgestellt werden kann.

## Patentansprüche

1. Verfahren zum Betreiben eines Kältemittelkreises (10) eines Kraftfahrzeugs (12), mit einem Verdichter (16), welcher in einem Heizbetrieb des Kältemittelkreises (10) ein Kältemittel durch einen ersten Kondensator (18) hindurch fördert, mittels welchem ein in einen Fahrgastraum (14) des Kraftfahrzeugs (12) einbringbarer Luftstrom (20) erwärmt wird, wobei der Verdichter (16) das Kältemittel in dem Heizbetrieb durch einen zweiten Kondensator (28) hindurch fördert, mittels welchem eine weitere Abkühlung des Kältemittels bewirkbar ist, wobei zumindest ein Teilstrom des von dem zweiten Kondensator (28) her kommenden Kältemittels mittels eines ersten Expansionsorgans (36) entspannt wird und einem ersten Verdampfer (38) zugeführt wird, mittels welchem eine Feuchte des in den Fahrgastraum (14) des Kraftfahrzeugs (12) einbringbaren Luftstroms verringerbar ist,
**dadurch gekennzeichnet, dass**
der zweite Kondensator (28) in dem Heizbetrieb von dem Kältemittel durchströmt wird, welches der Verdichter (16) zunächst durch den ersten Kondensator (18) hindurch fördert, wobei zum Erhöhen einer an dem ersten Kondensator (18) zur Verfügung stehenden Heizleistung ein weiterer Teilstrom des von dem zweiten Kondensator (28) her kommenden Kältemittels mittels eines zweiten Expansionsorgans (72) entspannt und einem zweiten Verdampfer (64) zugeführt wird, wobei das von den Verdampfern (38, 64) kommende Kältemittel einer Saugseite (48) des Verdichters (16) zugeführt wird.

2. Verfahren nach Anspruch 1,
**dadurch gekennzeichnet, dass**
vor dem Beaufschlagen des zweiten, insbesondere Wärme aus einem Kühlmittelstrom aufnehmenden, Verdampfers (64) mit dem weiteren Teilstrom zunächst zum Erhöhen der an dem ersten Kondensator (18) zur Verfügung stehenden Heizleistung ein durchströmbarer Querschnitt einer Drosseleinrichtung (56) verringert wird, welche bei einer in dem Heizbetrieb vorliegenden Strömungsrichtung des Kältemittels durch den Kältemittelkreis (10) stromabwärts des ersten Kondensators (18) und stromaufwärts des zweiten Kondensators (28) angeordnet ist.

3. Verfahren nach Anspruch 2,
**dadurch gekennzeichnet, dass**
ein Sollwert einer Temperatur des ersten Kondensators (18), bis zu welcher die Drosseleinrichtung (56) geöffnet bleibt, auf einen höheren Wert eingestellt wird als ein Sollwert der Temperatur des ersten Kondensators (18), bei deren Erreichen das zweite Expansionsorgan (72) geöffnet wird.

4. Verfahren nach Anspruch 2 oder 3,
**dadurch gekennzeichnet, dass**
der durchströmbare Querschnitt der Drosseleinrichtung (56) in Abhängigkeit von einem Sollwert einer Temperatur eingestellt wird, auf welche der Luftstrom mittels des ersten Kondensators (18) erwärmt werden soll.

5. Verfahren nach einem der Ansprüche 2 bis 4,
**dadurch gekennzeichnet, dass**
die Drosseleinrichtung (56) in eine Sperrstellung verbracht wird, in welcher ein Durchströmtwerden des zweiten Kondensators (28) unterbunden ist, wenn weder durch ein Verringern des durchströmbaren Querschnitts der Drosseleinrichtung (56) noch durch das anschließende Beaufschlagen des zweiten Verdampfers (64) mit dem weiteren Teilstrom des Kältemittels an dem ersten Kondensator (18) eine vorgegebene Heizleistung bereitstellbar ist.

6. Verfahren nach einem der vorhergehenden Ansprüche,
**dadurch gekennzeichnet, dass**
eine Öffnungsweite des ersten Expansionsorgans (36) in Abhängigkeit von dem weiteren Abkühlen, insbesondere Unterkühlen, des Kältemittels eingestellt wird, welches mittels des zweiten Kondensators (28) bewirkbar ist.

7. Verfahren nach einem der vorhergehenden Ansprüche,
**dadurch gekennzeichnet, dass**
zum Einstellen eines Luftmassenstroms, mit welchem der zweite Kondensator (28) beaufschlagt wird, eine an dem ersten Kondensator (18) aus dem Kältemittel abgeführte Wärmemenge und eine Differenz zwischen einer Temperatur des Kältemittels an einem Eintritt in den zweiten Kondensator (28) und einer Temperatur der Umgebungsluft berücksichtigt werden.

8. Verfahren nach einem der vorhergehenden Ansprüche,
**dadurch gekennzeichnet, dass**
in dem Heizbetrieb zum Ermitteln eines Überschusses und/oder eines Defizits der an dem ersten Kondensator (18) zur Verfügung stehenden Heizleistung eine Temperatur und eine Masse des dem ersten Kondensator (18) zugeführten Luftstroms, eine durch den ersten Kondensator (18) zu bewirkende Erwärmung des Luftstroms und eine in den Kältemittelkreis (10) eingebrachte Wärmemenge berücksichtigt werden.

9. Verfahren nach einem der vorhergehenden Ansprüche,
**dadurch gekennzeichnet, dass**
in dem Heizbetrieb

- durch Betätigen wenigstens einer Ventileinrichtung (22, 24, 78, 94) dafür gesorgt wird, dass ein gesamter von dem Verdichter geförderter Massenstrom des Kältemittels zumindest durch den ersten Kondensator (18) hindurchströmt und/oder
- eine direkte fluidische Kopplung des ersten Kondensators (18) und des zweiten Kondensators (28) mit der Saugseite (48) des Verdichters (16) unterbunden wird und/oder
- für ein Einstellen einer Förderleistung des Verdichters (16) ein auf der Saugseite (48) des Verdichters (16) vorhandener Druck und eine Temperatur des Luftstroms (20) stromabwärts des ersten Verdampfers (38) berücksichtigt werden.

10. Kraftfahrzeug mit einem Kältemittelkreis (10), welcher einen Verdichter (16) umfasst, mittels welchem in einem Heizbetrieb des Kältemittelkreises (10) ein Kältemittel durch einen ersten Kondensator (18) des Kältemittelkreises (10) hindurch förderbar ist, wobei mittels des ersten Kondensators (18) ein in einen Fahrgastraum (14) des Kraftfahrzeugs (12) einbringbarer Luftstrom erwärmbar ist, wobei mittels des Verdichters (16) das Kältemittel in dem Heizbetrieb durch einen zweiten Kondensator (28) des Kältemittelkreises (10) hindurch förderbar ist, wobei mittels des zweiten Kondensators (28) eine weitere Abkühlung des Kältemittels bewirkbar ist, wobei zumindest ein Teilstrom des von dem zweiten Kondensator (28) her kommenden Kältemittels mittels eines ersten Expansionsorgans (36) des Kältemittelkreises (10) entspannbar ist und einem ersten Verdampfer (38) des Kältemittelkreises (10) zuführbar ist, wobei mittels des ersten Verdampfers (38) eine Feuchte des in den Fahrgastraum (14) des Kraftfahrzeugs (10) einbringbaren Luftstroms (20) verringerbar ist,
**dadurch gekennzeichnet, dass**
der zweite Kondensator (28) in dem Heizbetrieb von dem Kältemittel durchströmbar ist, welches mittels des Verdichters (16) zunächst durch den ersten Kondensator (18) hindurch förderbar ist, wobei eine Steuerungseinrichtung (96) des Kraftfahrzeugs (12) dazu ausgebildet ist, zum Erhöhen einer an dem ersten Kondensator (18) zur Verfügung stehenden Heizleistung ein Entspannen eines weiteren Teilstroms des von dem zweiten Kondensator (28) her kommenden Kältemittels mittels eines zweiten Expansionsorgans (72) des Kältemittelkreises (10) und ein Zuführen des weiteren Teilstroms zu einem zweiten Verdampfer (64) des Kältemittelkreises (10) zu bewirken, wobei das von den Verdampfern (38, 64) kommende Kältemittel einer Saugseite (48) des Verdichters (16) zuführbar ist, wobei die Steuerungseinrichtung (96) eine Prozessoreinrichtung aufweist, und wobei die Prozessoreinrichtung Programmcode aufweist, der dazu eingerichtet ist, bei Ausführen durch die Prozessoreinrichtung ein Verfahren nach einem der Ansprüche 1 bis 9 durchzuführen.

## Claims

1. A method for operating a refrigerant circuit (10) of a motor vehicle (12), comprising a compressor (16) which conveys a refrigerant through a first condenser (18) during a heating operation of the refrigerant circuit (10), said condenser being used to heat an air flow (20) which can be introduced into a passenger compartment (14) of the motor vehicle (12), wherein the compressor (16) conveys the refrigerant during the heating operation through a second condenser (28), by means of which further cooling of the refrigerant can be effected, wherein at least a sub-flow of the refrigerant coming from the second condenser (28) is expanded by means of a first expansion element (36) and is supplied to a first evaporator (38), by means of which a moisture of the air flow which can be introduced into the passenger compartment (14) of the motor vehicle (12) can be reduced,
   **characterized in that**
   the second condenser (28) is flowed through during the heating operation by the refrigerant which the compressor (16) first conveys through the first condenser (18), wherein, in order to increase a heating capacity available at the first condenser (18), a further sub-flow of the refrigerant coming from the second condenser (28) is expanded by means of a second expansion element (72) and supplied to a second evaporator (64), wherein the refrigerant coming from the evaporators (38, 64) is supplied to a suction side (48) of the compressor (16).

2. The method according to claim 1,
   **characterized in that**
   before the second evaporator (64), which in particular absorbs heat from a refrigerant flow, is acted upon by the further sub-flow, a cross-section of a throttle device (56) through which flow can pass is first reduced in order to increase the heating capacity available at the first condenser (18), which throttle device is arranged downstream of the first condenser (18) and upstream of the second condenser (28) with a flow direction of the refrigerant through the refrigerant circuit (10) present during the heating operation.

3. The method according to claim 2,
   **characterized in that**
   a target value of a temperature of the first condenser (18), up to which the throttle device (56) remains open, is set to a higher value than a target value of the temperature of the first condenser (18), on reaching which the second expansion element (72) is opened.

4. The method according to claim 2 or 3,
   **characterized in that**
   the flow-through cross-section of the throttle device (56) is set as a function of a target value of a temperature, to which the air flow is to be heated by means of the first condenser (18).

5. The method according to any one of claims 2 to 4,
   **characterized in that**
   the throttle device (56) is brought into a blocking position in which the flow through the second condenser (28) is prevented if a predetermined heating capacity cannot be provided either by reducing the cross-section of the throttle device (56) through which the flow can pass or by the subsequent application of the further sub-flow of refrigerant to the second evaporator (64) at the first condenser (18).

6. The method according to any one of the preceding claims,
   **characterized in that**
   an opening width of the first expansion element (36) is set as a function of the further cooling, in particular sub-cooling, of the refrigerant, which can be effected by means of the second condenser (28).

7. The method according to any one of the preceding claims,
   **characterized in that**
   a quantity of heat dissipated from the refrigerant at the first condenser (18) and a difference between a temperature of the refrigerant at an inlet to the second condenser (28) and a temperature of the ambient air are taken into account in order to set a mass flow of air with which the second condenser (28) is acted upon.

8. The method according to any one of the preceding claims,
   **characterized in that**
   during the heating operation, a temperature and a mass of the air flow supplied to the first condenser (18), a heating of the air flow to be effected by the first condenser (18) and a quantity of heat introduced into the refrigerant circuit (10) are taken into account in order to determine an excess and/or a deficit of the heating capacity available at the first condenser (18).

9. The method according to any one of the preceding claims,
   **characterized in that**
   during the heating operation

      - by actuating at least one valve device (22, 24, 78, 94), it is ensured that an entire mass flow of the refrigerant conveyed by the compressor flows at least through the first condenser (18) and/or
      - a direct fluidic coupling of the first condenser (18) and the second condenser (28) with the suction side (48) of the compressor (16) is prevented and/or
- a pressure present on the suction side (48) of the compressor (16) and a temperature of the air flow (20) downstream of the first evaporator (38) are taken into account in order to set a delivery rate of the compressor (16).

10. A motor vehicle comprising a refrigerant circuit (10) which comprises a compressor (16) by means of which a refrigerant can be conveyed through a first condenser (18) of the refrigerant circuit (10), during a heating operation of the refrigerant circuit (10), wherein an air flow which can be introduced into a passenger compartment (14) of the motor vehicle (12) can be heated by means of the first condenser (18), wherein the refrigerant can be conveyed through a second condenser (28) of the refrigerant circuit (10) by means of the compressor (16) during the heating operation, wherein a further cooling of the refrigerant can be effected by means of the second condenser (28), wherein at least a sub-flow of the refrigerant coming from the second condenser (28) can be expanded by means of a first expansion element (36) of the refrigerant circuit (10) and can be supplied to a first evaporator (38) of the refrigerant circuit (10), wherein a moisture of the air flow (20) which can be introduced into the passenger compartment (14) of the motor vehicle (10) can be reduced by means of the first evaporator (38),
**characterized in that**
the second condenser (28) can be flowed through during the heating operation by the refrigerant, which can initially be conveyed through the first condenser (18) by means of the compressor (16), wherein a control device (96) of the motor vehicle (12) is designed, in order to increase a heating capacity available at the first condenser (18), to cause an expansion of a further sub-flow of the refrigerant coming from the second condenser (28) by means of a second expansion element (72) of the refrigerant circuit (10) and a supply of the further sub-flow to a second evaporator (64) of the refrigerant circuit (10), wherein the refrigerant coming from the evaporators (38, 64) can be supplied to a suction side (48) of the compressor (16), wherein the control device (96) comprises a processor device, and wherein the processor device comprises program code which is arranged to perform a method according to any one of claims 1 to 9 when executed by the processor device.

**Revendications**

1. Procédé de fonctionnement d'un circuit de refroidissement (10) d'un véhicule automobile (12), avec un compresseur (16) qui transporte un liquide de refroidissement à travers un premier condensateur (18) pendant une opération de chauffage du circuit de refroidissement (10), condensateur au moyen duquel un courant d'air (20) pouvant être introduit dans un habitacle (14) du véhicule automobile (12) est chauffé, dans lequel le compresseur (16) transporte le liquide de refroidissement pendant l'opération de chauffage à travers un second condensateur (28) au moyen duquel un refroidissement supplémentaire du liquide de refroidissement peut être provoqué, dans lequel au moins un courant partiel du liquide de refroidissement provenant du second condensateur (28) est expansé au moyen d'un premier organe d'expansion (36) et amené à un premier évaporateur (38) au moyen duquel une humidité du courant d'air pouvant être introduit dans l'habitacle (14) du véhicule automobile (12) peut être réduite,
**caractérisé en ce que**
le second condensateur (28) est traversé pendant l'opération de chauffage par le liquide de refroidissement que transporte le compresseur (16) tout d'abord à travers le premier condensateur (18), dans lequel un courant partiel supplémentaire du liquide de refroidissement provenant du second condensateur (28) est expansé au moyen d'un second organe d'expansion (72) afin d'augmenter une puissance de chauffage mise à disposition au niveau du premier condensateur (18) et amené à un second évaporateur (64), dans lequel le liquide de refroidissement provenant des évaporateurs (38, 64) est amené à un côté aspiration (48) du compresseur (16).

2. Procédé selon la revendication 1,
**caractérisé en ce que**
avant d'alimenter le second évaporateur (64) recevant en particulier de la chaleur d'un courant de réfrigérant avec le courant partiel supplémentaire, une section transversale d'un dispositif d'étranglement (56) pouvant être traversée par un flux est tout d'abord réduite pour augmenter la puissance de chauffage mise à disposition au niveau du premier condensateur (18), lequel dispositif est agencé en aval du premier condensateur (18) et en amont du second condensateur (28) avec un sens d'écoulement du liquide de refroidissement présent pendant l'opération de chauffage à travers le circuit de refroidissement (10).

3. Procédé selon la revendication 2,
**caractérisé en ce que**
une valeur de consigne d'une température du premier condensateur (18) jusqu'à laquelle le dispositif d'étranglement (56) reste ouvert, est réglée à une valeur supérieure à une valeur de consigne de la température du premier condensateur (18) afin d'ouvrir le second organe d'expansion (72) lorsque celle-ci est atteinte.

4. Procédé selon la revendication 2 ou 3,

**caractérisé en ce que**

la section transversale du dispositif d'étranglement (56) pouvant être traversée par un flux est réglée en fonction d'une valeur de consigne d'une température à laquelle le courant d'air doit être chauffé au moyen du premier condensateur (18).

5. Procédé selon l'une quelconque des revendications 2 à 4,
   **caractérisé en ce que**
   le dispositif d'étranglement (56) est amené dans une position de blocage dans laquelle le flux à travers le second condensateur (28) est empêché lorsqu'une puissance de chauffage prédéfinie ne peut être fournie ni par une diminution de la section transversale du dispositif d'étranglement (56) pouvant être traversée par un flux ni par l'alimentation consécutive du second évaporateur (64) avec le courant partiel supplémentaire du liquide de refroidissement au niveau du premier condensateur (18).

6. Procédé selon l'une quelconque des revendications précédentes,
   **caractérisé en ce que**
   une largeur d'ouverture du premier organe d'expansion (36) est réglée en fonction du refroidissement supplémentaire, en particulier sous-refroidissement, du liquide de refroidissement qui peut être provoqué au moyen du second condensateur (28).

7. Procédé selon l'une quelconque des revendications précédentes,
   **caractérisé en ce que**
   une quantité de chaleur évacuée du liquide de refroidissement au niveau du premier condensateur (18) et une différence entre une température du liquide de refroidissement au niveau d'une entrée dans le second condensateur (28) et une température de l'air ambiant sont prises en compte afin de régler un courant de masse d'air en lequel le second condensateur (28) est alimenté.

8. Procédé selon l'une quelconque des revendications précédentes,
   **caractérisé en ce que**
   pendant l'opération de chauffage, une température et une masse du courant d'air amené au premier condensateur (18), un chauffage du courant d'air causé par le premier condensateur (18) et une quantité de chaleur introduite dans le circuit de refroidissement (10) sont prises en compte afin de déterminer un excédent et/ou d'un déficit de la puissance de chauffage mise à disposition au niveau du premier condensateur (18).

9. Procédé selon l'une quelconque des revendications précédentes,
   **caractérisé en ce que**

pendant l'opération de chauffage

   - en actionnant au moins d'un dispositif de soupape (22, 24, 78, 94), il est fait en sorte qu'un courant de masse entier du liquide de refroidissement transporté par le compresseur traverse au moins le premier condensateur (18) et/ou
   - un couplage fluidique direct du premier condensateur (18) et du second condensateur (28) avec le côté aspiration (48) du compresseur (16) est évité et/ou
   - une pression présente du côté aspiration (48) du compresseur (16) et une température du courant d'air (20) en aval du premier évaporateur (38) sont prises en compte afin de régler une puissance de transport du compresseur (16).

10. Véhicule automobile avec un circuit de refroidissement (10) qui comprend un compresseur (16), au moyen duquel , un liquide de refroidissement peut être transporté à travers un premier condensateur (18) du circuit de liquide de refroidissement (10) pendant une opération de chauffage du circuit de refroidissement (10), dans lequel un courant d'air pouvant être introduit dans un habitacle (14) du véhicule automobile (12) peut être chauffé au moyen du premier condensateur (18), dans lequel le liquide de refroidissement peut être transporté à travers un second condensateur (28) du circuit de refroidissement (10) au moyen du compresseur (16) pendant l'opération de chauffage, dans lequel un refroidissement supplémentaire du liquide de refroidissement peut être provoqué au moyen du second condensateur (28), dans lequel au moins un courant partiel du liquide de refroidissement provenant du second condensateur (28) peut être expansé au moyen d'un premier organe d'expansion (36) du circuit de refroidissement (10) et amené à un premier évaporateur (38) du circuit de refroidissement (10), dans lequel une humidité du courant d'air (20) pouvant être introduit dans l'habitacle (14) du véhicule automobile (10) peut être réduite au moyen du premier évaporateur (38),
    **caractérisé en ce que**
    le second condensateur (28) peut être traversé pendant l'opération de chauffage par le liquide de refroidissement qui peut être transporté au moyen du compresseur (16) tout d'abord à travers le premier condensateur (18), dans lequel un dispositif de commande (96) du véhicule automobile (12) est conçu, afin d'augmenter une puissance de chauffage mise à disposition au niveau du premier condensateur (18), de provoquer une expansion d'un courant partiel supplémentaire du liquide de refroidissement provenant du second condensateur (28) au moyen d'un second organe d'expansion (72) du circuit de refroidissement (10) et une fourniture du courant partiel supplémentaire à un second évaporateur (64) du circuit de refroidissement (10), dans lequel le liquide de refroidissement provenant des évaporateurs (38, 64) peut être amené à un côté aspiration (48) du compresseur (16), dans lequel le dispositif de commande (96) présente un dispositif de processeur, et dans lequel le dispositif de processeur présente un code de programme qui est conçu afin de réaliser un procédé selon l'une quelconque des revendications 1 à 9 lors de son exécution par le dispositif de processeur.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018213232 A1
- DE 102019203292 A1
- DE 102019133488 A1
- DE 102019121711 A1
- DE 102009056027 A1